(19) **Europäisches Patentamt / European Patent Office / Office européen des brevets**

(11) **EP 4 469 326 B1**

(12) **EUROPEAN PATENT SPECIFICATION**

(45) Date of publication and mention
of the grant of the patent:
**24.06.2026 Bulletin 2026/26**

(21) Application number: **22702258.9**

(22) Date of filing: **27.01.2022**

(51) International Patent Classification (IPC):
**B60W 30/186** *(2012.01)*    **B60W 30/188** *(2012.01)*
**B62D 6/00** *(2006.01)*    **B62D 5/04** *(2006.01)*
**B60T 13/66** *(2006.01)*    **B60T 7/20** *(2006.01)*
**B60T 7/22** *(2006.01)*    **B60T 8/17** *(2006.01)*
**B60T 8/1755** *(2006.01)*    **B60T 17/22** *(2006.01)*

(52) Cooperative Patent Classification (CPC):
**B60W 30/186; B60T 7/20; B60T 7/22;
B60T 8/1708; B60T 8/17555; B60T 13/662;
B60T 17/22; B60W 30/188; B62D 5/0481;
B62D 6/00;** B60W 2050/0006

(86) International application number:
**PCT/EP2022/051891**

(87) International publication number:
**WO 2023/143717 (03.08.2023 Gazette 2023/31)**

(54) **HEAVY-DUTY VEHICLE MOTION SUPPORT DEVICE CAPABILITY FEEDBACK**

RÜCKKOPPLUNG DER FÄHIGKEIT EINER
SCHWERLASTFAHRZEUGBEWEGUNGSUNTERSTÜTZUNGSVORRICHTUNG

RÉTROACTION DE CAPACITÉ DE DISPOSITIF DE SUPPORT DE DÉPLACEMENT DE VÉHICULE
UTILITAIRE LOURD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.12.2024 Bulletin 2024/49**

(73) Proprietor: **VOLVO TRUCK CORPORATION
405 08 Göteborg (SE)**

(72) Inventors:
• **RYDSTRÖM, Mats
427 39 Billdal (SE)**

• **LAINE, Leo
438 94 Härryda (SE)**
• **GELSO, Esteban
421 51 Göteborg (SE)**

(74) Representative: **Ström & Gulliksson AB
P.O. Box 4188
203 13 Malmö (SE)**

(56) References cited:
WO-A1-2020/223796    WO-A1-2021/144065
DE-A1- 102009 020 794    US-A1- 2020 255 054
US-A1- 2020 331 451

**Description**

TECHNICAL FIELD

The present invention relates to vehicle motion management for heavy-duty vehicles, i.e., coordinated control of propulsion actuators and other motion support devices such as service brakes and power steering.

The invention can be applied with advantage in heavy-duty vehicles such as trucks, buses, and construction machines.

BACKGROUND

Vehicles are becoming ever more complex in terms of mechanics, pneumatics, hydraulics, electronics, and software. A modern heavy-duty vehicle may comprise a wide range of different actuators such as a combustion engine, one or more electric machines, friction brakes, electromagnetic brakes and power steering devices on one or more steered axles. These physical devices are commonly known as motion support devices (MSD) and may be controlled by respective MSD control units which are often arranged in direct connection to the MSD actuator. The local MSD control units are then normally connected to a central vehicle controller that is configured to perform overall vehicle motion management (VMM) by coordinating the different MSDs to obtain a desired motion by the vehicle, e.g., in response to a control input by a driver or a control signal generated by some autonomous drive (AD) algorithm or advanced driver assistance system (ADAS).

WO 2021/144065 A1 discloses an example of a layered control system for a heavy-duty vehicle, comprising a VMM function configured to perform force generation and MSD coordination in dependence of a motion request from a traffic situation management (TSM) layer, and to send control requests to a motion support device (MSD) control layer. The VMM function optimizes the allocation of MSD control commands in order to fulfil a motion request.

Energy efficiency, component wear, component failure probability and passenger comfort are becoming increasingly important performance metrics for heavy-duty vehicles such as trucks and semi-trailers used for cargo transport. It is therefore desired to perform the MSD coordination with these metrics in mind in addition to meeting the motion requests from upper layer controllers. Towards this end, improvements in VMM functionality for heavy-duty vehicles is desired.

SUMMARY

It is an object of the present invention to provide improved vehicle control architectures that allow more fine-grained optimization of the MSD coordination on a heavy-duty vehicle in pursuit of improvement in one or more secondary objectives, such as increased energy efficiency, reduced component wear, reduced failure probability on the component level and/or increased passenger comfort, in addition to the primary objective of controlling vehicle motion in dependence of a motion request from a driver or AD algorithm.

This object is at least in part obtained by an MSD control unit for controlling at least one MSD on a heavy-duty vehicle. The control unit is arranged to determine at least one limiting operating point of the MSD associated with a performance limit of the MSD, and also to determine a preferred operating point or range of operating points of the MSD indicative of an operating point or range of operating points of the MSD associated with an improvement in a secondary objective function value compared to the limiting operating point. The MSD control unit is also arranged to transmit a capability message to a VMM function comprising the limiting operating point of the MSD and the preferred operating point of the MSD.

Thus, the normal capability report from the MSD control unit is complemented by a preferred operating point or range of operating points, or at least by data indicative of the preferred operating point. This allows a higher layer controller to set an operating point not only within the range of operating points that the MSD is capable of providing, but also perform an optimization according to the secondary objective function. The feature is particularly suitable for VMM systems which comprise an MSD coordination function, where a plurality of MSDs are coordinated in order to obtain some desired vehicle motion. This coordination can often be performed in many different ways with the same resulting vehicle motion, and the availability of the preferred operating points of the different MSDs can then be used to select a coordination solution which satisfies the vehicle motion requirement and also improves the secondary objective function, which may comprise energy efficiency, component wear, passenger comfort, probability of MSD failure, or the like.

According to some aspects, the capability message comprises a time stamp and/or an indication of a validity time duration. This allows the central VMM controller making use of the capability message to determine validity of the message. It is an advantage that outdated messages can be detected and discarded.

The limiting operating point may, for instance, be indicative of a peak torque of an electric machine and the preferred operating point can then be indicative of a torque value associated with increased energy efficiency of the electric machine compared to the peak torque operating point. Thus, in a vehicle actuator system comprises more than one electric machine, perhaps of different types, MSD coordination can be performed with a secondary objective to increase energy efficiency, leading to advantages such as increased range, which of course is highly desirably in most heavy-duty vehicles.

The limiting operating point can also be a peak torque of a friction brake and the preferred operating point may then be related to a torque value associated with a decreased friction brake pad wear compared to the peak torque operating point. This would allow the MSD coordinator module to perform MSD coordination with a secondary objective targeting an increased component wear, i.e., a vehicle control which does not wear down the brakes as fast as could potentially happen otherwise.

The limiting operating point may also be selected as a maximum steering angle of a power steering device and the preferred operating point can then be a steering angle range associated with decreased wear on the steering system compared to operating at the maximum steering angle.

The capability message optionally also comprises a vector of operating points with associated secondary objective function values and/or a function approximation indicative of a relationship between operating points and secondary objective function values.

According to further aspects, the capability message is indicative of an estimated inverse tyre model. This allows an MSD controller which has information about an inverse tyre model to share this information with the central VMM controller in an efficient manner.

Generally, it is an advantage that the capability messages are distributed as hard capabilities with soft additions. This allows for backwards compatibility in systems not able to account for the preferred operating point data supplied from some MSD controllers. Also, how the preferred operating point data is used is up to the higher layer controller, allowing design freedom and independence between layers in a hierarchical control structure.

There is also disclosed herein computer programs, computer readable media, computer program products, and vehicles associated with the above discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

BRIEF DESCRIPTION OF THE DRAWINGS

With reference to the appended drawings, below follows a more detailed description of embodiments of the invention cited as examples. In the drawings:

Figure 1        shows an example heavy-duty vehicle;

Figure 2        schematically illustrates a motion support device control arrangement;

Figure 3        illustrates a layered vehicle control function architecture;

Figure 4        illustrates a first example capability function;

Figures 5A-B    illustrates example soft capability messages;

Figure 6        shows an example efficiency map of an electric machine;

Figure 7        is a graph showing an example inverse tyre model;

Figure 8        shows an example model fit based on measurements.

Figure 9        is a flow chart illustrating a method;

Figure 10       schematically illustrates a control unit;

Figure 11       shows an example computer program product; and

Figures 12A-C    show example additional cost functions accounting for capability reports.

DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

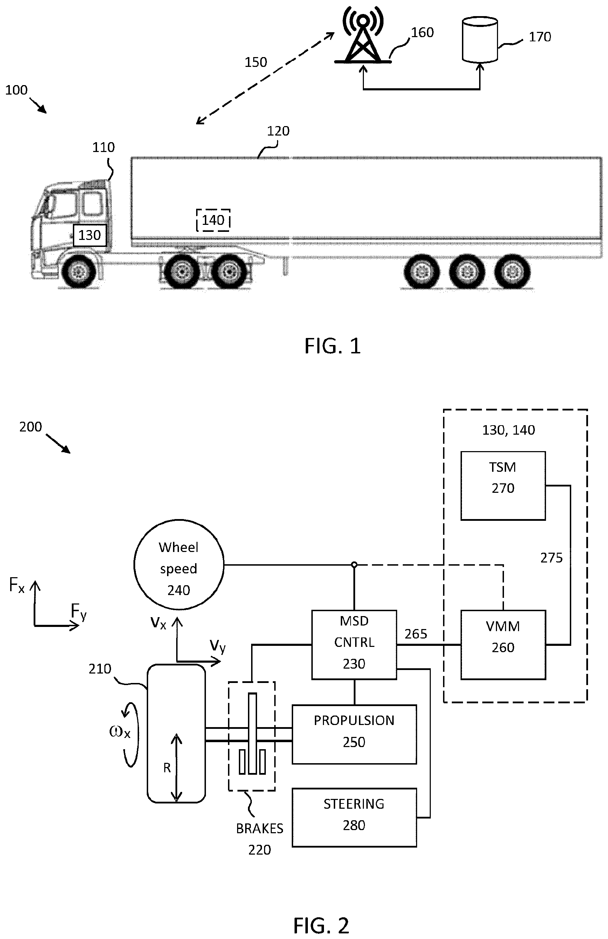

Figure 1 illustrates an example vehicle 100 for cargo transport where the herein disclosed techniques can be applied with advantage. The vehicle 100 comprises a tractor or towing vehicle 110 configured to tow a first trailer unit 120 by a fifth wheel connection in a known manner. The trailer wheels are normally braked wheels but may also comprise driven wheels on one or more axles. There may be one or more steered wheel-pairs on the vehicle 100.

It is appreciated that the herein disclosed methods and control units can be applied with advantage also in other types of heavy-duty vehicles, such as rigid trucks, trucks with drawbar connections, construction equipment, buses, and the like.

The tractor 110 comprises a vehicle unit computer (VUC) 130 for controlling various kinds of functionality, i.a. to achieve propulsion, braking, and steering. Some trailer units 120 also comprise a VUC 140 for controlling various functions of the trailer, such as braking of trailer wheels, and sometimes also trailer wheel propulsion and steering. It is appreciated that the VUCs 130, 140 may be centralized or distributed over several processing circuits. Parts of the vehicle control functions may also be executed remotely, e.g., on a remote server 170 connected to the vehicle 100 via wireless link 150 and a wireless access network 160.

One or more sensor devices mounted on the vehicle 100 are arranged to provide input data to the VUCs. Vision-based sensors such as cameras, wheel speed sensors, radar and lidar sensors, as well as global positioning system (GPS) sensors are commonly used in this context. These sensor devices can be used for vehicle state estimation, i.e., to estimate vehicle current motion and pose, and also for vehicle environment estimation, i.e., to obtain information regarding the surrounding environment in which the vehicle 100 is operating.

The VUC 130 on the tractor 110 and possibly also the VUC 140 on the trailer 120 may be configured to execute vehicle control methods which are organized according to a layered functional architecture where some functionality may be comprised in a traffic situation management (TSM) domain in a higher layer and some other functionality may be comprised in a vehicle motion management (VMM) domain residing in a lower functional layer.

Figure 2 schematically illustrates functionality 200 for controlling a wheel 210 by some example MSDs here comprising a friction brake 220 such as a disc brake or a drum brake, means for steering 280 such as a power steering arrangement, and an example propulsion device 250 although it is appreciated that more than one propulsion device can be used on a single axle. One or more propulsion devices may generally be used to power the vehicle 100. For instance, a central propulsion device can be connected to the wheels of a driven axle via a differential. Separate electric machines can also be connected to some of the wheels of the vehicle. These (optional) separate electric machines provide an increased actuator control freedom since they can be controlled independently of each other.

The friction brake 220 and the propulsion device 250 are examples of wheel torque generating devices, which may also be referred to as torque actuators and which can be controlled by one or more motion support device control units 230. Other example torque generating motion support devices which may be controlled according to the principles discussed herein comprise engine retarders and power steering devices. An MSD control unit 230 may be arranged to control one or more actuators. For instance, it is not uncommon that an MSD control unit 230 is arranged to control both wheels on an axle.

The TSM function 270 plans driving operation with a time horizon of, e.g., 10 seconds or so. This period corresponds to, e.g., the time it takes for the vehicle 100 to negotiate a curve. The vehicle maneuvers, planned and executed by the TSM, can be associated with acceleration profiles and curvature profiles which describe a desired vehicle velocity and turning for a given maneuver. According to an example, the TSM function 270 continuously requests 275 the desired acceleration profiles $a_{req}$ and curvature profiles $c_{req}$ from the VMM function 260 which performs force allocation to meet the requests from the TSM in a safe and robust manner. The VMM function 260 continuously feeds back capability information to the TSM function 270 detailing the current capability of the vehicle in terms of, e.g., forces, maximum velocities, and accelerations which can be generated.

Acceleration profiles and curvature profiles may of course also be obtained from a human driver of the heavy-duty vehicle via normal control input devices such as a steering wheel, accelerator pedal and brake pedal. The source of said acceleration profiles and curvature profiles is not within scope of the present disclosure and will therefore not be discussed in more detail herein.

The wheel 210 has a longitudinal velocity component $v_x$ and a lateral velocity component $v_y$. There is a longitudinal tyre force $F_x$ and a lateral tyre force $F_y$. Unless explicitly stated otherwise, the tyre forces are defined in the coordinate system of the wheel, i.e., the longitudinal force is directed in the rolling plane of the wheel, while the lateral tyre force is directed normal to the rolling plane of the wheel. The wheel has a rotational velocity $\omega_x$, and a radius R.

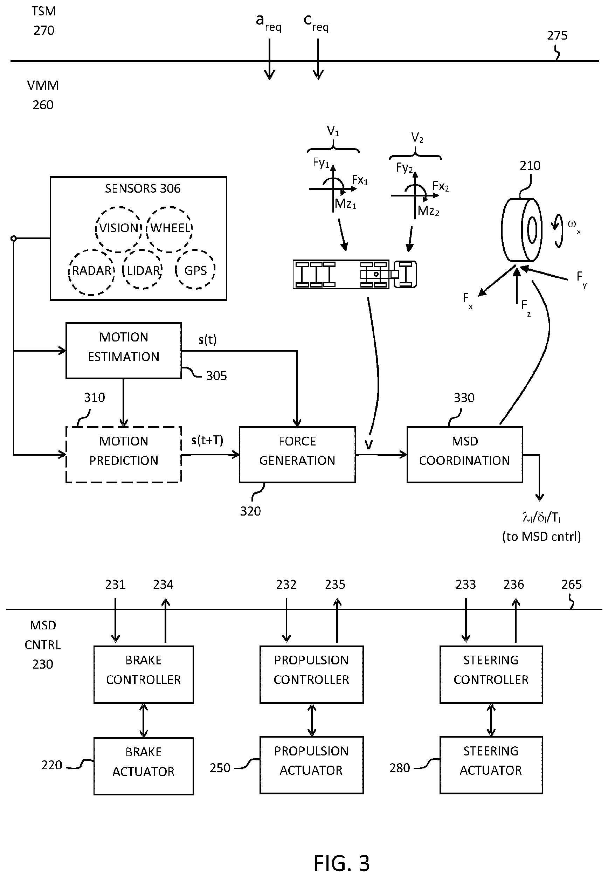

With reference also to Figure 3, the VMM function 260 operates with a time horizon of about 1 second or so, and continuously transforms the acceleration profiles $a_{req}$ and curvature profiles $c_{req}$ into control commands 231, 232, 233, for controlling vehicle motion functions, actuated by the different MSDs 220, 250, 280 of the vehicle 100 that report back respective capabilities 234, 235, 236 to the VMM function 260, which in turn are used as constraints in the vehicle control and in particular during MSD coordination.

The VMM function 260 performs vehicle state or motion estimation 305, i.e., the VMM function 260 continuously determines a current vehicle state at time t, s(t), comprising positions, speeds, accelerations and articulation angles of the different units in the vehicle combination by monitoring operations using various sensors 306 arranged on the vehicle 100, often but not always in connection to the MSDs 220, 250, 280. The VMM function 260 optionally also performs motion prediction 310, i.e., estimates a future vehicle state s(t+T) at one or more time instants t+T in the future. Both motion estimation 305 and motion prediction 310 are generally known techniques, and several example implementations exist in the literature. These sub-functions will therefore not be discussed in more detail herein.

The result of the motion estimation 305 and the optional motion prediction 310, i.e., the estimated vehicle state s(t), and possibly also the predicted future vehicle state s(t+T), is input to a force generation module 320 which determines the required global forces V=[$V_1$, $V_2$] for the different vehicle units to cause the vehicle 100 to move according to the requested acceleration and curvature profiles $a_{req}$, $c_{req}$.

The required global force vector V is input to an MSD coordination module 330 which allocates tyre forces and coordinates other MSDs such as steering and suspension. The coordinated MSDs then together provide the desired lateral Fy and longitudinal Fx forces on the vehicle units, as well as the required moments Mz, to obtain the desired motion by the vehicle combination 100.

The MSD coordination module 330 optimizes MSD allocation with a primary objective to meet the required global forces. This is done under the constraints imposed by the limiting operating points of the different MSDs, which limiting operating points are obtained at least in part via the capability data feedback from the MSD controllers. For instance, the reported capabilities 234, 235, 236 from the different MSDs may comprise an estimated maximum torque (positive and/or negative) which can be generated in the current operating conditions, a maximum longitudinal tyre force (Fx) that can be generated, a wheel slip limit, a maximum lateral force (Fy) that can be generated, a maximum steering angle, and so on. The reported capabilities may also comprise status signals, such as warning messages and error messages indicating a fault in a known manner.

The reported capability data from the MSD controllers to the VMM function 260 over the interface 265 is often of a scalar nature, i.e., a single value is used to indicate the current capability of the MSD actuator. This reduces the possibilities of the VMM function 260 to perform MSD coordination optimization, and to optimize its operation point and MSD set-point allocation with respect to some secondary objective like energy efficiency, component wear, failure probability and/or passenger comfort. It is a purpose of the present disclosures to remove this limitation and to provide an improved control architecture for heavy-duty vehicle motion management.

In order to allow the VMM function 260 to perform optimization with respect to a primary objective function (often comprising meeting the motion request from the TSM function 270) and also optimize vehicle control based on one or more secondary objective functions, it is proposed herein to let the various MSD controllers feed back capability data indicating a preferred operating point, in addition to an operational limit value. Thus, instead of just feeding back capability limits to the VMM function, the MSD controllers also feedback "soft" data indicating preferred operating points, or preferred ranges of operating points where, e.g., energy efficiency is higher than average, and/or where component wear is not as large as it is when operating at the limit point.

This soft capability data fed back to the VMM function 260 from the MSD controller or controllers 230 can be used to indicate preferred operating points of the various actuators. Instead of just indicating a limit (upper and/or lower) of what the MSDs can handle, the VMM can now perform more fine-grained optimization, targeting e.g., power consumption, component wear, probability of failure, etc. in addition to the motion control target received as a request from the TSM function 270.

For instance, the VMM function 260 can be configured to optimize an objective function such as

$$u = \arg \min_{\underline{u} \leq u \leq \overline{u}} \|W_u(u - u_{des})\|_p + \gamma \|W_v(Bu - v)\|_p$$

where

$\|\cdot\|_p$ denotes p-norm,

$u$ is the vector of MSD actuator requests, constrained by limiting values $\underline{u}$ and $\overline{u}$, which are the lower and upper boundaries of the respective actuators,

$W_u$ is a diagonal weighting matrix to penalize deviations from the desired MSD actuator request vector $u_{des}$,

$\gamma$ is a scalar weighting factor to allow different priority between the two terms of the objective function,

$W_v$ is a diagonal weighting matrix of the deviations from the global force vector v, and

$B$ is the control effectiveness matrix.

The soft capability information can be included in known MSD coordination optimization routines as weighting functions, or in some other way. For instance, additional constraints can be added to the optimization problem formulation above, with additional variables (often called slack variables), as well as additional cost terms in the objective function.

Interestingly, it is noted that the MSD controllers 230 have the option to send back soft capability data if they want and have the support for this type of function. Likewise, the VMM optimization routines are free to disregard the soft capability data. This means that compatibility between MSD controllers and VMM functions is maintained even if one layer does not support the soft capability feature.

The soft capability information is preferably made time dependent, meaning that the MSD controller can update its capability in dependence of the state of the MSD as the state of the MSD actuator changes over time. For instance, the temperature of a friction brake may cause a change in preferred operating point. I.e., the preferred applied negative torque may decrease in case the friction brake is at high temperature where component wear is relatively high. The soft capability for a friction brake can also be generated, e.g., from brake pad wear rate data stored locally at the MSD controller or remotely, e.g., at the server 170. The soft capability for a power steering device 280 can be generated based on wear, to bias the control requests made to the steering device away from "difficult" steering angles. Thus, the capability data from the local steering controller will indicate the maximum steering angles possible to achieve, and at the same time also indicate which steering angle range that is preferred in order to increase the lifetime of the steering arrangement.

To summarize the above discussion, there is disclosed herein an MSD control unit 230 for controlling at least one MSD 220, 250, 280 on a heavy-duty vehicle 100. The control unit 230 is arranged to determine a limiting operating point of the MSD 220, 250, 280 associated with a performance limit of the MSD and also to determine a preferred operating point of the MSD 220, 250, 280 indicative of an operating point of the MSD associated with an improvement in a secondary objective function value compared to the limiting operating point. This secondary objective function may, e.g., be an objective function which is indicative of an energy efficiency of the MSD 220, 250, 280, a component wear of the MSD 220, 250, 280 a probability of failure and/or a passenger comfort value.

Feeding back capability data indicative of a probability of failure becomes particularly interesting in heavy-duty vehicles which are normally associated with very strict requirements on safety of operation. By obtaining information from the MSDs indicative of a probability of failure for given set-points, the MSD coordination module 330 can control the vehicle to keep the overall probability of failure at an acceptable level at all times. For instance, a friction brake device can report a capability which indicates the probability of brake fading for a given torque, which probability can be determined as a function of, e.g., brake temperature and brake pad wear and/or brake pad age. An electric machine can also be associated with an increased probability of failure due to overheating in case it is operated close to maximum capacity. These probability values can be tabulated a-priori and stored in a memory device of the MSD controller. The values can also be regularly updated, e.g., from the remote server 170, which may have access to failure rate statistics from other vehicles.

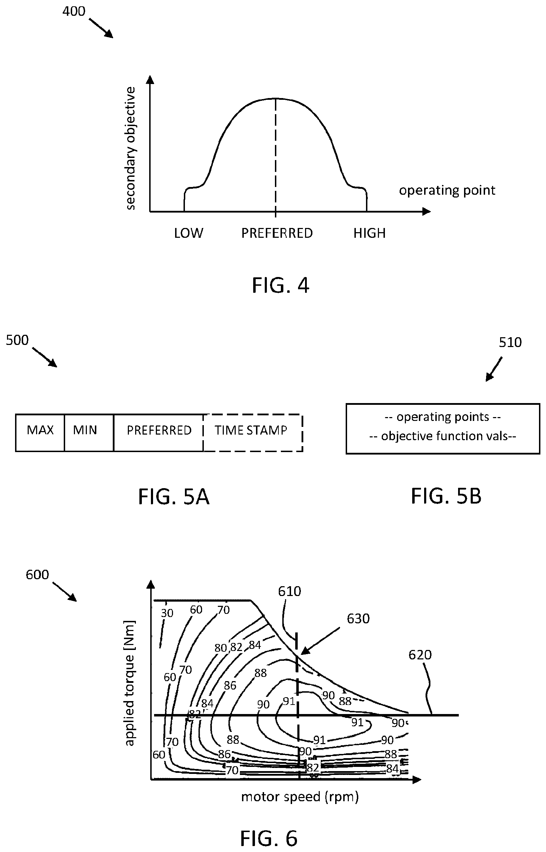

Figure 4 shows a graph 400 which schematically illustrates a secondary objective function value in dependence of an operating point of an example MSD. This particular MSD has both low and high limiting operating point beyond which actuation is not possible. Thus, the MSD coordination module 330 is free to allocate any operating point between the limiting values (which could be for instance a range of steering angles). However, looking at the secondary objective function values over the span in-between the limiting values, it is seen that set-points approximately in the middle are preferred. The MSD coordination module 330 can now, if it so desires, exploit this extra information in the control allocation optimization in order to meet its primary objective of fulfilling the motion request and at the same time output a solution which is associated with an increased secondary objective function value compared to the case where no such consideration is taken in the MSD control allocation.

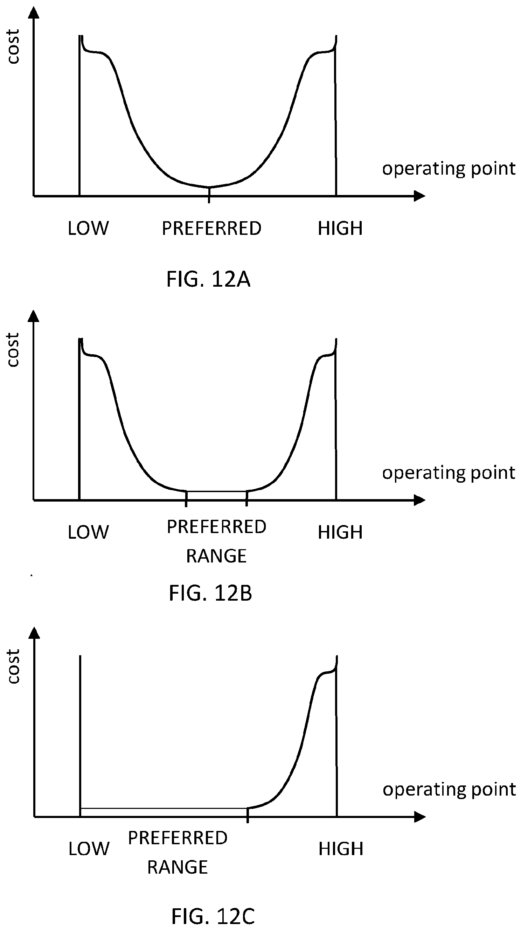

Figures 12A-C illustrate some example additional cost function components which can be added to the main objective function of the optimization problem to account for the soft capability reports of the different MSDs. Figure 12A illustrates an example where there is a preferred value and an approximately quadratically increasing perceived cost associated with deviation from the preferred value. In Figure 12B, the additional cost is instead zero as long as the operation point in kept within some preferred range of operating points, while in Figure C there is an increasing cost associated with going above the preferred range of operating points.

According to a first example, the limiting operating point can be indicative of a peak torque of an electric machine and the preferred operating point can be indicative of a torque value associated with increased energy efficiency of the electric machine compared to the peak torque operating point. Figure 6 illustrates an example efficiency map 600 of an electric machine. Electric machine efficiency maps are generally known and will therefore not be discussed in more detail herein. However, it is appreciated that this efficiency map can be used to determine a soft capability message for transmission from the MSD controller of the electric machine to the VMM function 260. For instance, suppose that the electric machine is currently operating at the speed indicated by the dashed line 610, then there is a clear preference for operating at torques around the values indicated by the solid line 620 as opposed to operating at the peak torque 630. In this case the soft capability message may, e.g., comprise an indication of the peak obtainable torque and also an indication that a set-point in vicinity of the solid line is preferred due to an increase efficiency level. The MSD coordination module 330 may then decide to account for this extra information during optimization, or to disregard the extra information if it so desires.

Related to the first example, it may also be desired to penalize operating the electric machine at values close to the peak torque, to avoid thermal overload of the electric machine and/or the drive, and then maybe overheating it and reducing its life. Such considerations can also be incorporated in the capability report.

According to a second example, the limiting operating point is a peak torque of a friction brake and wherein the preferred operating point or range of operating points is a torque value or range of torques associated with a decreased friction brake pad wear compared to the peak torque operating point.

According to a third example, the limiting operating point is a maximum steering angle of a power steering device, and the preferred operating point is steering angle range associated with decreased wear on the steering system compared to operating at the maximum steering angle.

The MSD control unit 230 is furthermore arranged to transmit a capability message to a VMM function 260 comprising the limiting operating point of the MSD and the preferred operating point of the MSD. The capability message may simply be formatted as a message with two or three parts, indicating a minimum and/or a maximum operating point of the MSD, along with data indicative of a preferred operating point, as illustrated schematically by the message format 500 in Figure 5A.

According to some aspects, the capability message comprises a time stamp and/or an indication of a validity time duration, as also indicated in Figure 5A. This information can be used by the VMM function to determine a time window for when the capability message is relevant, and when the received soft capability information should be discarded due to being outdated.

According to other aspects, the capability message comprises a vector of operating points with associated secondary objective function values and/or a function approximation indicative of a relationship between operating points and secondary objective function values. This type of soft capability message 510 is schematically illustrated in Figure 5B, where a vector of sample operating points has been matched with corresponding secondary objective function values. This type of message of course allows the MSD coordination module 330 to perform an even more fine-grained optimization targeting fulfillment of the primary objective function (fulfilling the motion request by generating the required global forces) at the same time as a secondary objective function is improved.

There is also disclosed herein a VUC, 130, 140 arranged for vehicle motion management of a heavy-duty vehicle 100. The VUC 130, 140 is arranged to obtain a motion request comprising an acceleration profile $a_{req}$ and/or a curvature profile $c_{req}$ from a traffic situation management, TSM, function, perform vehicle state and/or motion estimation 305, 310 to estimate a current and/or future state of the heavy-duty vehicle 100, perform force generation 320 to determine a set of global forces $V=[V_1, V_2]$ to cause the vehicle 100 to move according to the motion request, and coordinate a plurality of motion support devices, MSD, by an MSD coordination module 330 to generate a set of MSD actuator requests 231, 232, 233. Notably, the MSD coordination module 330 is arranged to receive at least one capability message from an MSD control unit 230, where the capability message comprises a limiting operating point of the MSD and a preferred operating point of the MSD, where the MSD coordination module 330 is arranged to coordinate the plurality of MSDs based on the received at least one capability message.

According to some further aspects, the VMM function 260 is arranged to configure the behavior of the various MSD controller by parameterizing control functions of the actuators. For instance, loop gains and the like can be changed by the VMM to obtain a more responsive actuator, at the cost of reduced driver comfort. In this case the MSD controllers may send capability signals which indicate preferred set-points in dependence of a plurality of different parameter settings.

Referring back again to Figure 3, the output of the MSD coordination module 330 may comprise classic torque requests $T_i$ and steering angle requests $\delta_i$ which can be sent to the different MSD controllers 230. The requests are sent over the interface 265 between the central controller and the one or more local MSD controllers. This interface may be based on a controller area network (CAN) bus or on some other network technology, such as an Ethernet link. A problem in many heavy-duty vehicle architectures is that the interface between the central controller and the local MSD controllers is of limited bandwidth, and may incur significant delay of the requests sent over the interface. This means that the response time of the vehicle actuators to a change in operating conditions, such as an abrupt reduction in road friction, may not be fast enough to successfully compensate for the change in operating condition.

Longitudinal wheel slip $\lambda_x$ may, in accordance with SAE J670 SAE Vehicle Dynamics Standards Committee January 24, 2008, be defined as

$$\lambda_x = \frac{R\omega_x - v_x}{max(|R\omega_x|, |v_x|)}$$

where $R$ is an effective wheel radius in meters, $\omega_x$ is the angular velocity of the wheel, and $v_x$ is the longitudinal speed of the wheel in the coordinate system of the wheel. Thus, $\lambda_x$ is bounded between -1 and 1 and quantifies how much the wheel is slipping with respect to the road surface. Wheel slip is, in essence, a speed difference measured between the wheel and the vehicle. Thus, the herein disclosed techniques can be adapted for use with any type of wheel slip definition. It is also appreciated that a wheel slip value is equivalent to a wheel speed value given a velocity of the wheel over the surface, in the coordinate system of the wheel.

In order for a wheel or tyre to produce a tyre force, slip must occur. For smaller slip values the relationship between slip and generated force are approximately linear, where the proportionality constant is often denoted as the slip stiffness of the tyre. The normal force $F_z$ acting on the tyre of a wheel 210 is key to determining some important vehicle properties. For instance, the normal force to a large extent determines the achievable lateral tyre force $F_y$ by the wheel since, normally, $F_x \leq \mu F_z$, where $\mu$ is a friction coefficient associated with a current road friction condition. The maximum available lateral force for a given lateral slip can be described by the so-called Magic Formula as described in "Tyre and vehicle dynamics", Elsevier Ltd. 2012, ISBN 978-0-08-097016-5, by Hans Pacejka. An inverse tyre model is a model of wheel behavior which describes tyre force generated in longitudinal direction in the rolling direction and/or lateral direction orthogonal to the longitudinal direction as function of wheel slip.

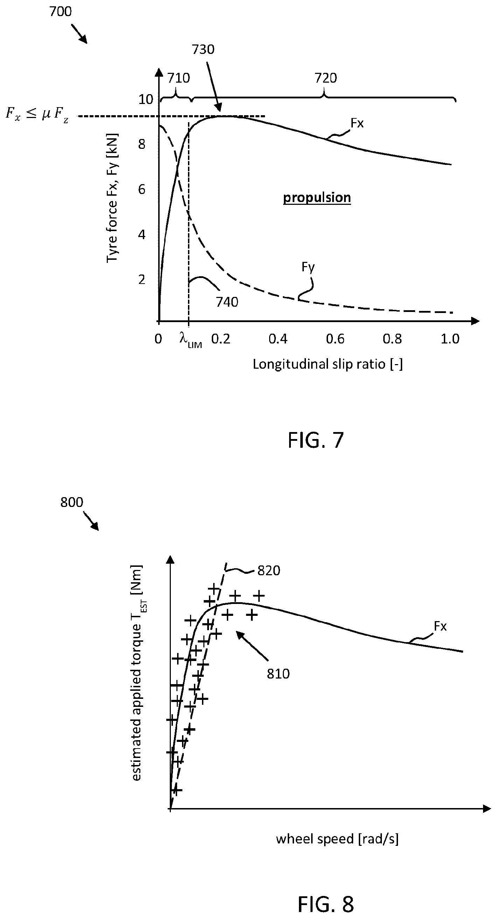

Figure 7 is a graph 700 showing an example of achievable tyre force as function of wheel slip $\lambda$, i.e., an example inverse tyre model, where it is noted that the tyre force numerical values on the axle are just example values and not to be interpreted as limiting the present disclosure. The longitudinal tyre force Fx shows an almost linearly increasing part 710 for small wheel slips, followed by a part 720 with more non-linear behaviour for larger wheel slips. It is noted that there is a peak 730, beyond which the tyre force declines with wheel slip, i.e., if the wheel speed is increased beyond a given wheel speed, the generated tyre force will decline. The obtainable lateral tyre force Fy decreases rapidly even at relatively small longitudinal wheel slips. It is desirable to maintain vehicle operation in the linear region 710, where the obtainable longitudinal force in response to an applied brake command is easier to predict, and where enough lateral tyre force can be generated if needed. For larger wheel slips, e.g., exceeding 0.1, a more non-linear region 720 is seen. Control of a vehicle in this region may be difficult and is therefore often avoided. It may be interesting for traction in off-road conditions and the like where a larger slip limit for traction control might be preferred, but not for on-road operation. To ensure operation in this region, a wheel slip limit $\lambda_{LIM}$ on the order of, e.g., 0.1, can be imposed on a given wheel.

The classic torque control loops of a heavy duty vehicle are, as discussed above, normally associated with time constants on the order of 10 ms or so, which may not be fast enough to react to changes in, e.g., road friction and the like. To improve vehicle motion management, an inverse tyre model can be used by the VMM 260 to instead generate a desired tyre force at some wheel. Then, instead of requesting a torque corresponding to the desired tyre force, the VMM can translate the desired tyre force into an equivalent wheel slip or, equivalently, a wheel speed relative to a speed over ground and request this slip instead. The main advantage being that the MSD control device 230 will be able to deliver the requested torque with much higher bandwidth by maintaining operation at the desired wheel slip, using the vehicle speed $v_x$ and the wheel rotational velocity $\omega_x$. The reason being that the control loop is now local, on the MSD side of the interface 265, which avoids the delay 340 on the interface between the central VMM controller and the local MSD controller. These concepts were discussed in WO2021144010A1. This approach of course requires that the inverse tyre model is at least approximately known, and also that reasonably accurate data on vehicle speed $v_x$ and wheel rotational velocity $\omega_x$ are available at the central VMM control unit 260. Nevertheless, it is appreciated that the type of soft capability messages can be determined based on this type of inverse tyre model. For instance, a maximum slip capability of a torque generating MSD can be determined as the peak location 730, while a preferred operating point can be set with a preferred margin to the peak, such as the dotted line slip limit 740 where at least some lateral force can be generated. Operation at or below the dotted line set-point 740 is also most likely associated with a significant reduction in tyre wear compared to operating at the set-point 730.

With reference to the example 700 in Figure 7, suppose now that the inverse tyre model is Fx, and that a vehicle 100 is being accelerated (the wheel force request is positive). A tyre force of about 6kN is initially configured, which corresponds to a wheel slip of about 0.05. Further acceleration is then desired, and the tyre force is increased up to about 9kN. This corresponds to the peak obtainable tyre force in this example. In case the VMM control unit 260 requests a further increase in tyre force, then the tyre will enter into the non-linear region 720, and the increase in wheel speed will result in a decrease in generated tyre force, which is undesired in most situations. Notably, this decrease in generated tyre force will also be seen as a decrease in generated torque on the wheel axle, as long as the wheel speed is kept constant at least in relation to the slowly changing vehicle speed.

In case of a permanent magnet synchronous machine PMSM, the following relationship holds at least approximately in many cases

$$T_{EST} = \frac{3p}{2}\left(\psi_m i_q + (L_d - L_q)i_d i_q\right)$$

where

$p$ is the number of pole pairs of the PMSM,
$\psi_m$ is the flux linkage of the permanent magnet,
$L_d$ and $L_q$ are the $d$- and $q$-axis inductances of the PMSM, and
$i_d$ and $i_q$ are the $d$- and $q$-axis currents of the PMSM.

In "Accurate Torque Estimation for Induction Motors by Utilizing Globally Optimized Flux Observers," 2020 International Symposium on Power Electronics, Electrical Drives, Automation and Motion SPEEDAM, 2020, pp. 219-226, M. Stender, O. Wallscheid and J. Bocker discuss torque estimation for induction motors.

US8080956B2 provides an example of how applied torque can be estimated in practice.

Torque applied to an axle can of course also be measured by a mechanical or an electric torque sensor. A torque sensor, also known as a torque transducer or torquemeter, is a device for measuring and sometimes also recording the torque on a rotating system, such as a drive axle of a wheel 210. Static torque is relatively easy to measure. Dynamic torque, on the other hand, is not easy to measure since it generally requires transfer of some effect electric or magnetic from the shaft being measured to a static system. One way to achieve this is to condition the shaft or a member attached to the shaft with a series of permanent magnetic domains. The magnetic characteristics of these domains will vary according to the applied torque, and thus can be measured using non-contact sensors. Commonly, torque sensors or torque transducers use strain gauges applied to a rotating shaft or axle. With this method, a means to power the strain gauge bridge is necessary, as well as a means to receive the signal from the rotating shaft. This can be accomplished using slip rings, wireless telemetry, or rotary transformers. Newer types of torque transducers add conditioning electronics and an A/D converter to the rotating shaft. Stator electronics then read the digital signals and convert those signals to a high-level analog output signal. Yet another way to measure torque is by way of twist angle measurement or phase shift measurement, whereby the angle of twist resulting from applied torque is measured by using two angular position sensors and measuring the phase angle between them.

By estimating a torque which is currently being applied by an MSD, and correlating changes in applied torque with changes in wheel or axle speed $\omega$, assuming that both the applied torque and the controlled wheel speed changes much faster than the vehicle speed over ground. If, during propulsion with a positive generated torque, an increase in wheel speed $\omega$ results in a decrease in estimated applied torque, then it can be inferred that the peak 730 on the inverse tyre model has been passed, and that the nonlinear region to the right of the peak has been entered. When this happens, the MSD controller can transmit a capability message to the central VMM controller comprising a maximum supportable wheel slip, e.g., corresponding to the peak force wheel slip 730 and also a preferred wheel slip value which can be selected a bit lower than the peak, for instance configured with tyre wear rate in mind. The MSD coordination module 330 in the VMM function 260 can then perform vehicle motion optimization knowing approximately what the peak wheel slip of a given wheel is, and also which wheel slip that is preferred in order to not wear out the tyres prematurely. It is understood that the above concept can also be applied to braking, i.e., during generation of a negative torque by one or more torque generating MSDs.

The MSD control unit 230 is optionally arranged to determine or at least approximate the relationship between the target wheel speed $\omega_i$ and the torque generated by the torque generating MSD 220, 250, based on a sequence of estimated applied torques and corresponding configured wheel speeds. In a simple realization, this relationship can be just a linear relationship between applied torque and wheel speed, which then carries information about the linear region 710 of the current inverse tyre model. Polynomial models or other more advanced models can also be used of course. Filtering can be applied to reduce measurement noise. The relationship can be estimated from pairs of wheel speed and estimated applied torque, e.g., by fitting a model curve such as a straight line, or by applying model-based filter, such as a Kalman filter, a particle filter, or the like, as shown in the example 800 of Figure 8, where the crosses 810 represent measurement pairs of estimated torque and wheel speed, and where the dashed line 820 represents the fitted model curve. This fitted model will of course only be valid for a given vehicle speed, but the VMM function 260, knowing the vehicle speed, may infer the true inverse tyre model from this type of feedback data. According to an example, the control unit 230 is arranged to output data indicative of the determined model as a soft capability signal 234, 235 to the VMM control unit 260. The VMM control unit 260 may have information related to the speed of the vehicle, and the radius of the wheel 210, and can therefore translate the model into an approximation of the current inverse tyre model.

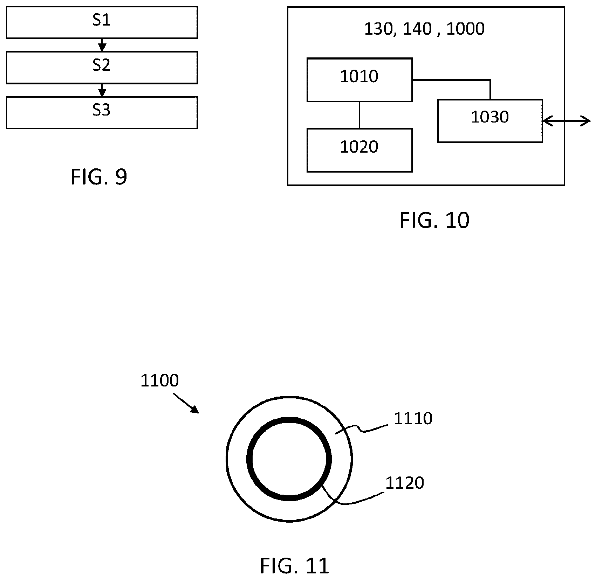

Figure 9 is a flow chart illustrating methods which summarize at least some of the discussions above. There is illustrated a computer implemented method performed in an MSD control unit 230 for controlling at least one MSD 220, 250, 280 on a heavy-duty vehicle 100. The method comprises determining (S1) a limiting operating point of the MSD 220, 250, 280 associated with a performance limit of the MSD, determining (S2) a preferred operating point of the MSD 220, 250, 280 indicative of an operating point of the MSD associated with an improvement in a secondary objective function value compared to the limiting operating point, and transmitting (S3) a capability message to a VMM function 260 comprising the limiting operating point of the MSD and the preferred operating point of the MSD.

Figure 10 schematically illustrates, in terms of a number of functional units, the components of a control unit such as the VUC 130, 140. The control unit may implement one or more of the above discussed functions of the TSM 270, VMM 260 and/or the MSD control function 230, according to embodiments of the discussions herein. The control unit is configured to execute at least some of the functions discussed above for control of a heavy-duty vehicle 100. Processing circuitry 1010 is provided using any combination of one or more of a suitable central processing unit CPU, multiprocessor, microcontroller, digital signal processor DSP, etc., capable of executing software instructions stored in a computer program product, e.g. in the form of a storage medium 1020. The processing circuitry 1010 may further be provided as at least one application specific integrated circuit ASIC, or field programmable gate array FPGA.

Particularly, the processing circuitry 1010 is configured to cause the control unit 101 to perform a set of operations, or steps, such as the methods discussed in connection to Figure 9. For example, the storage medium 1020 may store the set of operations, and the processing circuitry 1010 may be configured to retrieve the set of operations from the storage medium 1020 to cause the control unit 130, 140, 1000 to perform the set of operations. The set of operations may be provided as a set of executable instructions. Thus, the processing circuitry 1010 is thereby arranged to execute methods as herein disclosed.

The storage medium 1020 may also comprise persistent storage, which, for example, can be any single one or combination of magnetic memory, optical memory, solid state memory or even remotely mounted memory.

The control unit 130, 140, 1000 may further comprise an interface 1030 for communications with at least one external device. As such the interface 1030 may comprise one or more transmitters and receivers, comprising analogue and digital components and a suitable number of ports for wireline or wireless communication.

The processing circuitry 1010 controls the general operation of the control unit 130, 140, 1000, e.g., by sending data and control signals to the interface 1030 and the storage medium 1020, by receiving data and reports from the interface 1030, and by retrieving data and instructions from the storage medium 1020. Other components, as well as the related functionality, of the control node are omitted in order not to obscure the concepts presented herein.

Figure 11 illustrates a computer readable medium 1110 carrying a computer program comprising program code means 1120 for performing the methods illustrated in Figure 9, when said program product is run on a computer. The computer readable medium and the code means may together form a computer program product 1100.

## Claims

1. A motion support device, MSD, control unit (230) for controlling at least one MSD (220, 250, 280) on a heavy-duty vehicle (100), wherein the control unit (230) is arranged to:

   determine a limiting operating point of the MSD (220, 250, 280) associated with a performance limit of the MSD, **characterised in that** the control unit (230) is arranged to:

   determine a preferred operating point or range of operating points of the MSD (220, 250, 280) indicative of an operating point or range of operating points of the MSD associated with an improvement in a secondary objective function value compared to the limiting operating point, and
   transmit a capability message to a vehicle motion management, VMM, function (260) comprising the limiting operating point of the MSD and the preferred operating point of the MSD.

2. The control unit (230) according to claim 1, wherein the secondary objective function is indicative of an energy efficiency of the MSD (220, 250, 280).

3. The control unit (230) according to claim 1 or 2, wherein the secondary objective function is indicative of a component wear of the MSD (220, 250, 280).

4. The control unit (230) according to any previous claim, wherein the secondary objective function is indicative of a passenger comfort value.

5. The control unit (230) according to any previous claim, wherein the secondary objective function is indicative of a probability of failure of the MSD (220, 250, 280).

6. The control unit (230) according to any previous claim, wherein the capability message comprises a time stamp and/or an indication of a validity time duration.

7. The control unit (230) according to any previous claim, wherein the limiting operating point is indicative of a peak torque of an electric machine and wherein the preferred operating point is indicative of a torque value associated with increased energy efficiency of the electric machine compared to the peak torque operating point.

8. The control unit (230) according to any of claims 1-6, wherein the limiting operating point is a peak torque of a friction brake and wherein the preferred operating point is a torque value associated with a decreased friction brake pad wear compared to the peak torque operating point.

9. The control unit (230) according to any of claims 1-6, wherein the limiting operating point is a maximum steering angle of a power steering device and wherein the preferred operating point is steering angle range associated with decreased wear on the steering system compared to operating at the maximum steering angle.

10. The control unit (230) according to any previous claim, wherein the capability message comprises a vector of operating points with associated secondary objective function values and/or a function approximation indicative of a relationship between operating points and secondary objective function values.

11. The control unit (230) according to any previous claim, wherein the capability message is indicative of an estimated inverse tyre model (700).

12. A vehicle (100) comprising at least one MSD control unit (230) according to any of claims 1-11.

13. A vehicle unit computer, VUC, (130, 140) arranged for vehicle motion management, VMM, of a heavy-duty vehicle (100), wherein the VUC (130, 140) is arranged to:

obtain a motion request comprising an acceleration profile ($a_{req}$) and/or a curvature profile ($c_{req}$) from a traffic situation management, TSM, function,
perform vehicle state and/or motion estimation (305, 310) to estimate a current and/or future state of the heavy-duty vehicle (100),
perform force generation (320) to determine a set of global forces ($V=[V_1, V_2]$) to cause the vehicle (100) to move according to the motion request, and
coordinate a plurality of motion support devices, MSD, by an MSD coordination module (330) to generate a set of MSD actuator requests (231, 232, 233),
wherein the MSD coordination module (330) is arranged to receive at least one capability message from an MSD control unit (230), where the capability message comprises a limiting operating point of the MSD and a preferred operating point of the MSD,
where the operating point of the MSD is indicative of an operating point of the MSD associated with an improvement in a secondary objective function value compared to the limiting operating point, and
where the MSD coordination module (330) is arranged to coordinate the plurality of MSDs based on the received at least one capability message.

14. A vehicle (100) comprising VUC (130, 140) according to claim 13.

15. A computer implemented method performed in a motion support device, MSD, control unit (230) for controlling at least one MSD (220, 250, 280) on a heavy-duty vehicle (100), the method comprising:

determining (S1) a limiting operating point of the MSD (220, 250, 280) associated with a performance limit of the MSD,
determining (S2) a preferred operating point of the MSD (220, 250, 280) indicative of an operating point of the MSD associated with an improvement in a secondary objective function value compared to the limiting operating point, and
transmitting (S3) a capability message to a vehicle motion management, VMM, function (260) comprising the limiting operating point of the MSD and the preferred operating point of the MSD.

16. A computer program comprising program code means for performing the steps of claim 15 when said program is run on a computer or on processing circuitry (1010) of a control unit (130, 140, 1000).

**Patentansprüche**

1. Eine Bewegungsunterstützungsvorrichtung, MSD, Steuereinheit (230) zum Steuern mindestens einer MSD (220, 250, 280) an einem Schwerlastfahrzeug (100), wobei die Steuereinheit (230) eingerichtet ist zum: bestimmen eines begrenzenden Betriebspunkts der MSD (220, 250, 280), der einer Leistungsgrenze der MSD zugeordnet ist, **dadurch gekennzeichnet, dass** die Steuereinheit (230) eingerichtet ist zum:

   bestimmen eines bevorzugten Betriebspunkts oder Bereichs von Betriebspunkten der MSD (220, 250, 280), der einen Betriebspunkt oder Bereich von Betriebspunkten der MSD angibt, der einer Verbesserung eines Werts einer sekundären Zielfunktion im Vergleich zu dem begrenzenden Betriebspunkt zugeordnet ist, und übertragen einer Fähigkeitsnachricht an eine Fahrzeugbewegungsmanagement, VMM, Funktion (260), umfassend den begrenzenden Betriebspunkt der MSD und den bevorzugten Betriebspunkt der MSD.

2. Die Steuereinheit (230) nach Anspruch 1, wobei die sekundäre Zielfunktion eine Energieeffizienz der MSD (220, 250, 280) angibt.

3. Die Steuereinheit (230) nach Anspruch 1 oder 2, wobei die sekundäre Zielfunktion einen Komponentenverschleiß der MSD (220, 250, 280) angibt.

4. Die Steuereinheit (230) nach einem der vorhergehenden Ansprüche, wobei die sekundäre Zielfunktion einen Fahrgastkomfortwert angibt.

5. Die Steuereinheit (230) nach einem der vorhergehenden Ansprüche, wobei die sekundäre Zielfunktion eine Ausfallwahrscheinlichkeit der MSD (220, 250, 280) angibt.

6. Die Steuereinheit (230) nach einem der vorhergehenden Ansprüche, wobei die Fähigkeitsnachricht einen Zeitstempel und/oder eine Angabe einer Gültigkeitszeitdauer umfasst.

7. Die Steuereinheit (230) nach einem der vorhergehenden Ansprüche, wobei der begrenzende Betriebspunkt ein Spitzendrehmoment einer elektrischen Maschine angibt und wobei der bevorzugte Betriebspunkt einen Drehmomentwert angibt, der einer erhöhten Energieeffizienz der elektrischen Maschine im Vergleich zu dem Spitzendrehmoment-Betriebspunkt zugeordnet ist.

8. Die Steuereinheit (230) nach einem der Ansprüche 1-6, wobei der begrenzende Betriebspunkt ein Spitzendrehmoment einer Reibungsbremse ist und wobei der bevorzugte Betriebspunkt ein Drehmomentwert ist, der einem verringerten Reibungsbremsbelagverschleiß im Vergleich zu dem Spitzdrehmoment-Betriebspunkt zugeordnet ist.

9. Die Steuereinheit (230) nach einem der Ansprüche 1-6, wobei der begrenzende Betriebspunkt ein maximaler Lenkwinkel einer Servolenkungsvorrichtung ist und wobei der bevorzugte Betriebspunkt ein Lenkwinkelbereich ist, der einem verringerten Verschleiß an dem Lenksystem im Vergleich zu einem Betrieb bei dem maximalen Lenkwinkel zugeordnet ist.

10. Die Steuereinheit (230) nach einem der vorhergehenden Ansprüche, wobei die Fähigkeitsnachricht einen Vektor von Betriebspunkten mit zugeordneten Werten der sekundären Zielfunktion und/oder eine Funktionsapproximation umfasst, die eine Beziehung zwischen Betriebspunkten und Werten der sekundären Zielfunktion angibt.

11. Die Steuereinheit (230) nach einem der vorhergehenden Ansprüche, wobei die Fähigkeitsnachricht ein geschätztes inverses Reifenmodell (700) angibt.

12. Ein Fahrzeug (100), umfassend mindestens eine MSD-Steuereinheit (230) nach einem der Ansprüche 1-11.

13. Ein Fahrzeugeinheitscomputer, VUC, (130, 140), eingerichtet für Fahrzeugbewegungsmanagement, VMM, eines Schwerlastfahrzeugs (100), wobei der VUC (130, 140) eingerichtet ist zum:

   erhalten einer Bewegungsanforderung, umfassend ein Beschleunigungsprofil ($a_{req}$) und/oder ein Krümmungsprofil ($c_{req}$), von einer Verkehrssituationsmanagement, TSM, Funktion, durchführen einer Fahrzeugzustands- und/oder Bewegungsschätzung (305, 310), um einen aktuellen und/oder zukünftigen Zustand des Schwerlastfahrzeugs (100) zu schätzen,

durchführen einer Krafterzeugung (320), um einen Satz globaler Kräfte ($V=[V_1, V_2]$) zu bestimmen, um zu veranlassen, dass sich das Fahrzeug (100) gemäß der Bewegungsanforderung bewegt, und koordinieren einer Vielzahl von Bewegungsunterstützungsvorrichtungen, MSD, durch ein MSD-Koordinationsmodul (330), um einen Satz von MSD-Aktoranforderungen (231, 232, 233) zu erzeugen,

wobei das MSD-Koordinationsmodul (330) eingerichtet ist, um mindestens eine Fähigkeitsnachricht von einer MSD-Steuereinheit (230) zu empfangen, wobei die Fähigkeitsnachricht einen begrenzenden Betriebspunkt der MSD und einen bevorzugten Betriebspunkt der MSD umfasst,

wobei der Betriebspunkt der MSD einen Betriebspunkt der MSD angibt, der einer Verbesserung eines Werts einer sekundären Zielfunktion im Vergleich zu dem begrenzenden Betriebspunkt zugeordnet ist, und

wobei das MSD-Koordinationsmodul (330) eingerichtet ist, die Vielzahl von MSDs basierend auf der empfangenen mindestens einen Fähigkeitsnachricht zu koordinieren.

**14.** Ein Fahrzeug (100), umfassend VUC (130, 140) nach Anspruch 13.

**15.** Ein computerimplementiertes Verfahren, durchgeführt in einer Bewegungsunterstützungsvorrichtung, MSD, Steuereinheit (230) zum Steuern mindestens einer MSD (220, 250, 280) an einem Schwerlastfahrzeug (100), wobei das Verfahren umfasst:

bestimmen (S1) eines begrenzenden Betriebspunkts der MSD (220, 250, 280), der einer Leistungsgrenze der MSD zugeordnet ist,

bestimmen (S2) eines bevorzugten Betriebspunkts der MSD (220, 250, 280), der einen Betriebspunkt der MSD angibt, der einer Verbesserung eines Werts einer sekundären Zielfunktion im Vergleich zu dem begrenzenden Betriebspunkt zugeordnet ist, und

übertragen (S3) einer Fähigkeitsnachricht an eine Fahrzeugbewegungsmanagement, VMM, Funktion (260), umfassend den begrenzenden Betriebspunkt der MSD und den bevorzugten Betriebspunkt der MSD.

**16.** Ein Computerprogramm, umfassend Programmcodemittel zum Durchführen der Schritte nach Anspruch 15, wenn das Programm auf einem Computer oder auf einer Verarbeitungsschaltung (1010) einer Steuereinheit (130, 140, 1000) ausgeführt wird.

## Revendications

**1.** Unité de commande (230) de dispositif de support de mouvement, MSD, pour commander au moins un MSD (220, 250, 280) sur un véhicule lourd (100), dans laquelle l'unité de commande (230) est prévue pour :

- déterminer un point de fonctionnement limite du MSD (220, 250, 280) associé à une limite de performance du MSD,

**caractérisée en ce que** l'unité de commande (230) est prévue pour :

- déterminer un point de fonctionnement préféré ou une plage de points de fonctionnement du MSD (220, 250, 280) indicatif d'un point de fonctionnement ou d'une plage de points de fonctionnement du MSD associé à une amélioration d'une valeur de fonction objective secondaire comparée au point de fonctionnement limite, et
- transmettre un message de capacité à une fonction de gestion de mouvement de véhicule, VMM, (260) comprenant le point de fonctionnement limite du MSD et le point de fonctionnement préféré du MSD.

**2.** Unité de commande (230) selon la revendication 1, dans laquelle la fonction objective secondaire est indicative d'une efficacité énergétique du MSD (220, 250, 280).

**3.** Unité de commande (230) selon la revendication 1 ou 2, dans laquelle la fonction objective secondaire est indicative d'une usure de composant du MSD (220, 250, 280).

**4.** Unité de commande (230) selon une quelconque revendication précédente, dans laquelle la fonction objective secondaire est indicative d'une valeur de confort de passager.

**5.** Unité de commande (230) selon une quelconque revendication précédente, dans laquelle la fonction objective secondaire est indicative d'une probabilité de défaillance du MSD (220, 250, 280).

**6.** Unité de commande (230) selon une quelconque revendication précédente, dans laquelle le message de capacité comprend un horodatage et/ou une indication d'une durée de temps de validité.

**7.** Unité de commande (230) selon une quelconque revendication précédente, dans laquelle le point de fonctionnement limite est indicatif d'un couple de crête d'une machine électrique et dans laquelle le point de fonctionnement 25 préféré est indicatif d'une valeur de couple associée à une efficacité énergétique accrue de la machine électrique comparée au point de fonctionnement de couple de crête.

**8.** Unité de commande (230) selon l'une quelconque des revendications 1-6, dans laquelle le point de fonctionnement limite est un couple de crête d'un frein à friction et dans laquelle le point de fonctionnement préféré est une valeur de couple associée à une usure diminuée de plaquette de frein à friction comparée au point de fonctionnement de couple de crête.

**9.** Unité de commande (230) selon l'une quelconque des revendications 1-6, dans laquelle le point de fonctionnement limite est un angle de braquage maximum d'un dispositif de direction assistée et dans laquelle le point de fonctionnement préféré est une plage d'angle de braquage associée à une usure diminuée sur le système de direction comparée au fonctionnement à l'angle de braquage maximum.

**10.** Unité de commande (230) selon une quelconque revendication précédente, dans laquelle le message de capacité comprend un vecteur de points de fonctionnement avec des valeurs de fonction objective secondaire associées et/ou une approximation de fonction indicative d'une relation entre des points de fonctionnement et des valeurs de fonction objective secondaire.

**11.** Unité de commande (230) selon une quelconque revendication précédente, dans laquelle le message 10 de capacité est indicatif d'un modèle de pneumatique inverse estimé (700).

**12.** Véhicule (100), comprenant au moins une unité de commande MSD (230) selon l'une quelconque des revendications 1-11.

**13.** Ordinateur d'unité de véhicule, VUC, (130, 140) prévu pour une gestion de mouvement de véhicule, VMM, d'un véhicule lourd (100), dans lequel le VUC (130, 140) est prévu pour :

- obtenir une requête de mouvement comprenant un profil d'accélération ($a_{req}$) et/ou un profil de courbure ($c_{req}$) depuis une fonction de gestion de situation de trafic, TSM,
- effectuer une estimation d'état et/ou de mouvement de véhicule (305, 310) pour estimer un état actuel et/ou futur du véhicule lourd (100),
- effectuer une génération de force (320) pour déterminer un ensemble de forces globales ($V=[V_1,V_2]$) pour amener le véhicule (100) à se déplacer selon la requête de mouvement, et
- coordonner une pluralité de dispositifs de support de mouvement, MSD, par un module de coordination MSD (330) pour générer un ensemble de requêtes d'actionneur MSD (231, 232, 233),

dans lequel le module de coordination MSD (330) est prévu pour recevoir au moins un message de capacité depuis une unité de commande MSD (230), où le message de capacité comprend un point de fonctionnement limite du MSD et un point de fonctionnement préféré du MSD,

où le point de fonctionnement du MSD est indicatif d'un point de fonctionnement du MSD associé à une amélioration d'une valeur de fonction objective secondaire comparée au point de fonctionnement limite, et où le module de coordination MSD (330) est prévu pour coordonner la pluralité de MSD sur la base dudit au moins un message de capacité reçu.

**14.** Véhicule (100), comprenant un VUC (130, 140) selon la revendication 13.

**15.** Procédé mis en œuvre par ordinateur effectué dans une unité de commande (230) de dispositif de support de mouvement, MSD, pour commander au moins un MSD (220, 250, 280) sur un véhicule lourd (100), le procédé comprenant :

- la détermination (S1) d'un point de fonctionnement limite du MSD (220, 250, 280) associé à une limite de performance du MSD,

- la détermination (S2) d'un point de fonctionnement préféré du MSD (220, 250, 280) indicatif d'un point de fonctionnement du MSD associé à une amélioration d'une valeur de fonction objective secondaire comparée au point de fonctionnement limite, et
- la transmission (S3) d'un message de capacité à une fonction (260) de gestion de mouvement de véhicule, VMM, comprenant le point de fonctionnement limite du MSD et le point de fonctionnement préféré du MSD.

16. Programme informatique, comprenant des moyens de code de programme pour effectuer les étapes de la revendication 15 lorsque ledit programme est exécuté sur un ordinateur ou sur des circuits de traitement (1010) d'une unité de commande (130, 140, 1000).

FIG. 1

FIG. 2

FIG. 3

400

**FIG. 4**

500

510

| MAX | MIN | PREFERRED | TIME STAMP |
|-----|-----|-----------|------------|

| -- operating points -- |
|-----|
| -- objective function vals-- |

**FIG. 5A**                    **FIG. 5B**

600

**FIG. 6**

**FIG. 7**

**FIG. 8**

| S1 |
|---|
| S2 |
| S3 |

FIG. 9

130, 140 , 1000

| 1010 |
|---|
| 1020 |

| 1030 |
|---|

FIG. 10

1100

1110

1120

FIG. 11

FIG. 12A

FIG. 12B

FIG. 12C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021144065 A1
- WO 2021144010 A1

- US 8080956 B2

**Non-patent literature cited in the description**

- **HANS PACEJKA**. Tyre and vehicle dynamics. Elsevier Ltd., 2012

- **M. STENDER** ; **O. WALLSCHEID** ; **J. BOCKER**. Accurate Torque Estimation for Induction Motors by Utilizing Globally Optimized Flux Observers. *2020 International Symposium on Power Electronics, Electrical Drives, Automation and Motion SPEEDAM*, 2020, 219-226